# EUROPEAN PATENT SPECIFICATION

(11) **EP 3 154 775 B1**
(45) Date of publication and mention of the grant of the patent: **04.08.2021**
(21) Application number: 15802388.7
(22) Date of filing: 01.06.2015
(51) Int. Cl.: B32B 29/00, D21H 27/40, B32B 5/14, B32B 3/28, B32B 7/04

(54) **EMBOSSED MULTI-PLY TISSUE PRODUCT**
GEPRÄGTES MEHRLAGIGES TISSUEPRODUKT
PRODUIT EN PAPIER MOUSSELINE GAUFRÉ MULTICOUCHE

(30) Priority: 05.06.2014 US 201414297134
(43) Date of publication of application: 19.04.2017
(73) Proprietor: Kimberly-Clark Worldwide, Inc., Neenah, Wisconsin 54956 (US)
(72) Inventor: MARGO MORENO, Oriol, Sevenoaks TN13 3UE (GB)
(74) Representative: Dehns
(86) International application number: PCT/IB2015/054157
(87) International publication number: WO 2015/186053

(56) References cited:
- EP-B1- 1 017 563
- CN-A- 1 252 756
- US-A1- 2004 231 813
- US-A1- 2005 244 615
- US-B1- 6 368 539
- US-B2- 8 083 893
- US-B2- 8 216 664
- None

## Description

### Field of the Invention

This invention relates to the embossing of base sheet paper for the manufacturing of tissue products such as toilet paper, napkins, kitchen towels, facial tissue, and the like. This invention relates in particular to multi-ply tissue products which are embossed to bond the plies together, enhance aesthetics, and/or optimize tactile properties.

### Background of the Invention

Consumer tissue products such as toilet paper, napkins, kitchen towels, facial tissue, and the like are frequently embossed. One application of embossing is to bond together multiple plies of tissue layers to produce a final product that is thicker and more absorbent than a single ply might allow. Embossing typically introduces some degree of texture or topographical variation. While in some products certain texture may be desirable, in other products it may undesirable, such as facial tissue where a relatively flat, smooth, non-abrasive surface is preferred.

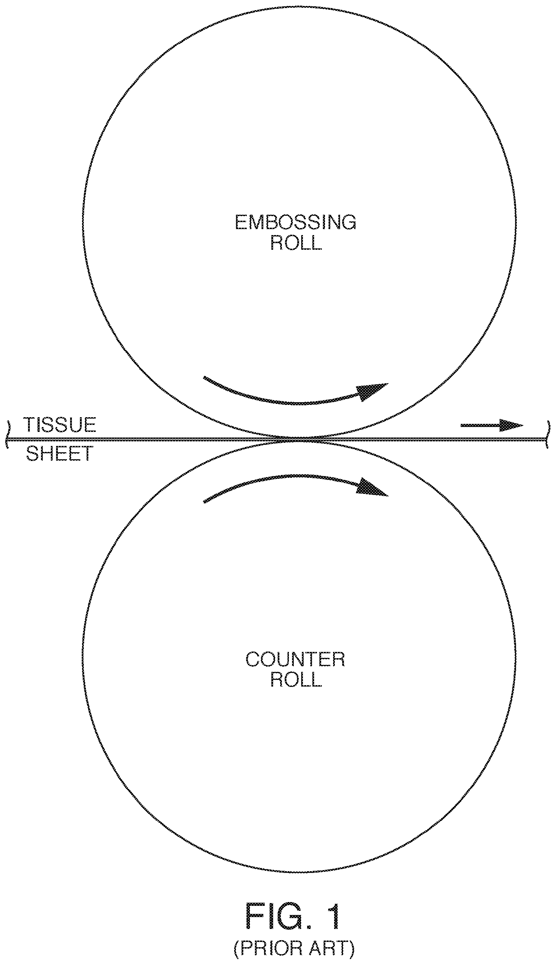

As shown in Fig. 1, embossing on tissue is generally carried out by passing the tissue webs between two rolls - an embossing roll and a counter roll. The multiple plies of tissue, upon passing between a nip formed between the two rolls, get embossed together. The embossing roll generally has protrusions, such as in the shape of small pins. The shape and size of the pins, the number and concentration of pins, and the pattern in which they are arranged can all be varied to effect the bonding, tactile, and aesthetics properties of the final product. The manner in which the both the embossing roll and the counter roll are engraved or otherwise shaped will also impact the final product properties. Three conventional tissue embossing technologies know to those of skill in the art are "matched-steel" embossing, "pin-to-flat" embossing, and "pin-to-pin" embossing.

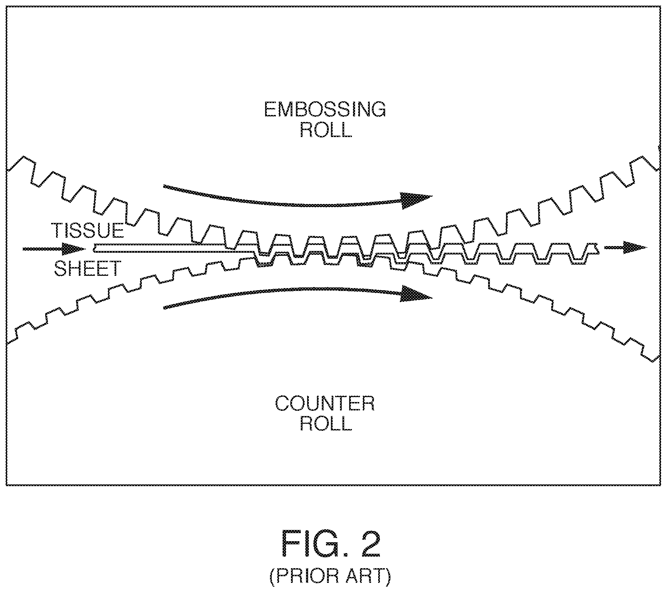

Referring to Fig. 2, in "matched-steel" embossing, protrusions are disposed in a pattern on the embossing roll. The counter roll is configured to have small cavities in the same number, same concentration, same shape and in the exact same positions as the pins disposed on the embossing roll. Thus, conventionally, the "female" pattern of cavities engraved in the counter roll matches exactly the "male" pattern of protrusions disposed on the embossing roll. In operation in this matched-steel approach, the embossing roll and the counter roll typically do not contact one another (other than on the supporting gear units), in part because the cavities are typically marginally bigger than the pins. In the matched-steel approach, precise alignment of the rolls relative to each other is important to prevent the pins from missing the cavities, which would crush the embossing roll pins against the flat surface of the counter roll.

The tissue product created by a matched-steel approach is a multi-ply tissue product with projections on one side and cavities on the other side. The plies are attached to each other quite well, by virtue of the plies being firmed pressed together at the embossment points. However, the presence of the projections in the final tissue product can result in an undesirable rough surface. This technology has the advantage of low wear and long roll life due to the lack of metal-to-metal contact between the rolls.

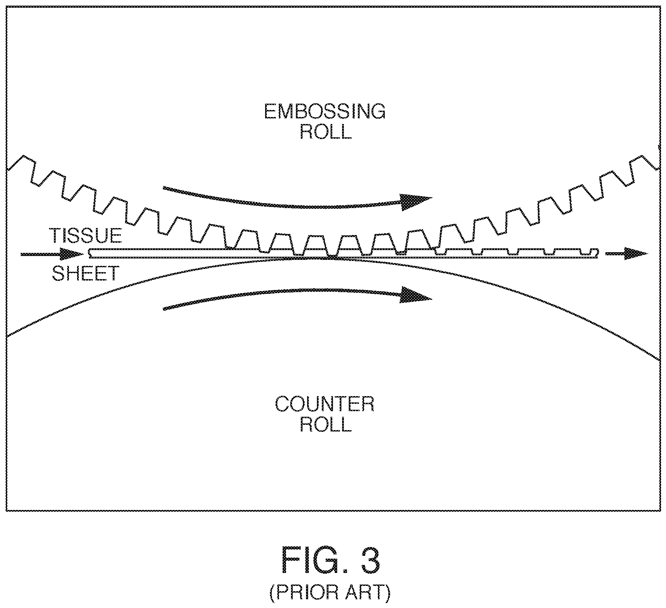

Referring to Fig. 3, in "pin-to-flat" embossing, protrusions are disposed in a pattern on the embossing roll, as with matched-steel embossing. The counter roll, in contrast, is completely flat and smooth in the pin-to-flat approach. The ply embossing in this case relies on compressing the tissue between the pin and the flat surface of the counter roll.

The tissue product created by a pin-to-flat approach is a multi-ply tissue with cavities on one side and substantially flat and smooth on the other side. As the embossing is less aggressive with this approach than with the matched-steel approach, the attachment between the plies of the final product tends to be weaker. However, the tissue will feel smoother to the touch and have a flatter appearance, because there are no rough surfaces but instead cavities on one side and a flat and smooth surface on the other. Since in this approach the counter roll is completely flat, no alignment or registration between the rolls is necessary. However, zero-gap or even positive interference of the pins with the counter roll is necessary to achieve adequate embossing using solely the pin-to-flat approach. This can cause undesirable wear on the pins, necessitating more frequent regrinding of the embossing rolls leading to increased equipment costs and increased "downtime" of converting machines. Furthermore, the recent increased use of short fibers in the tissue making industry further exacerbates these problems, because short fibers tend to be more abrasive to steel equipment, and short fibers can reduce tissue bulk which further increases the difficultly to satisfactorily emboss the plies together.

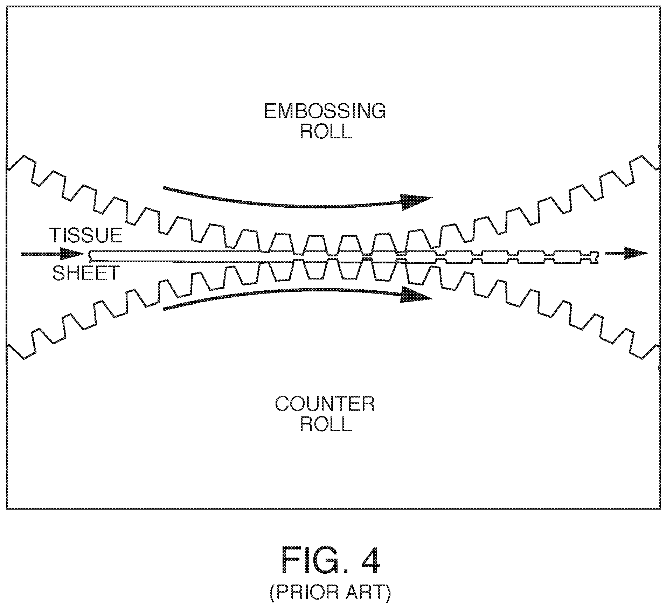

Referring to Fig. 4, in "pin-to-pin" embossing, protrusions are disposed on both the embossing roll and the counter roll, such that both rolls resemble the embossing roll of the pin-to-flat approach. The counter roll is configured to have pins in the same number, same concentration, and in the same positions as the pins disposed on the embossing roll. Precise alignment between the rolls is necessary, so that the tissue layers are compressed between two pins whose heads are aligned at the nip. The tissue product created by a pin-to-pin approach is a multi-ply tissue with cavities on both sides.

The three approaches described above each have certain benefits but also certain drawbacks as noted. What is needed is an embossing technique that can deliver strong ply-to-ply attachment, yet provide a substantially non-abrasive texture and a substantially smooth and flat appearance, and also provide reduced roll wear and reduced machine downtime stemming from roll changes.

The present invention is characterised over US 2005/244615 which discloses an absorbent paper product having a combination of marking and embossment patterns.

### Summary of the Invention

According to a first aspect, the present invention provides a tissue product as claimed in claim 1.

According to a second aspect, the present invention provides a tissue product as claimed in claim 3.

### Brief Description of the Drawings

Fig. 1 representatively illustrates a cross-sectional side view of a generic embossing roll and counter roll, with a tissue sheet being embossed therebetween.
Fig. 2 representatively illustrates a cross-sectional side view of a conventional "matched steel" embossing nip, and a tissue sheet passing through the nip and being embossed therein.
Fig. 3 representatively illustrates a cross-sectional side view of a conventional "pin-to-flat" embossing nip, and a tissue sheet passing through the nip and being embossed therein.
Fig. 4 representatively illustrates a cross-sectional side view of a conventional "pin-to-pin" embossing nip, and a tissue sheet passing through the nip and embossed therein.
Fig. 5 representatively illustrates an example of a cross-sectional side view of an embossing roll and counter roll suitable for providing the product of the present invention, along with a cross-sectional side view of two tissue webs being embossed together therebetween.
Fig. 5A representatively illustrates a detail view of the section of Fig. 5 labeled 5A.
Fig. 5B representatively illustrates a detail view of the section of Fig. 5A labeled 5B.
Fig. 5C representatively illustrates an alternative example of the apparatus and process of Fig. 5A, shown without the tissue sheet.
Fig. 5D representatively illustrates another alternative example of the apparatus and process of Fig. 5A, shown without the tissue sheet.
Fig. 5E representatively illustrates yet another alternative example of the apparatus and process of Fig. 5A, shown without the tissue sheet.
Fig. 6 representatively illustrates a top plan view of one example of a composite web of the process suitable for providing the product of the present invention.
Fig. 7 representatively illustrates a top plan view of one embodiment of the tissue product of the present invention.
Fig. 7A representatively illustrates a cross-sectional view of a tissue product not in accordance with the present invention.
Fig. 7B representatively illustrates a cross-sectional view of an alternative embodiment of the tissue product of Fig. 7, and representatively illustrates a product which would result from the process and apparatus of Fig. 5D.
Fig. 7C representatively illustrates a cross-sectional view of the tissue product embodiment of Fig. 7, and representatively illustrates a product which would result from the process and apparatus of Fig. 5E.
Fig. 8 representatively illustrates a top plan view of another embodiment of the tissue product of the present invention.
Fig. 9 representatively illustrates a top plan view of yet another embodiment of the tissue product of the present invention.

### Detailed Description of Particular Embodiments

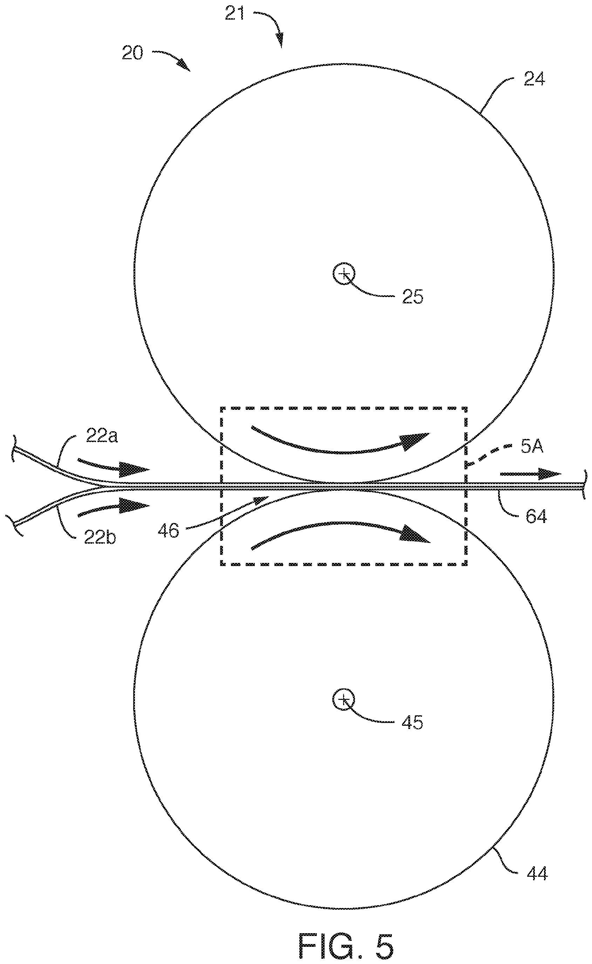

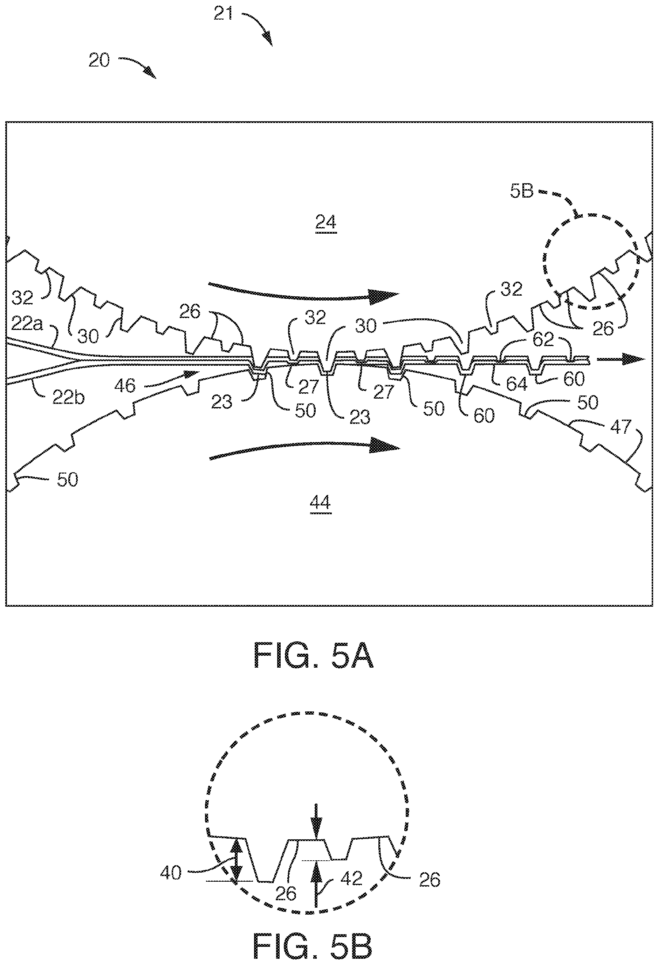

Referring to Figs. 5A-5E, examples of apparatus suitable for providing the product of the present invention pertain to an apparatus 20 to mate a plurality of tissue webs 22a, 22b via embossing. The plurality of tissue webs can include two or more tissue webs, such as two, three, four, five, or more tissue webs. The apparatus 20 includes an embossing roll 24 having an embossing roll primary surface 26. The embossing roll 24 includes first protrusions 30 and second protrusions 32. In particular examples, each first protrusion 30 protrudes a first height 40 from the primary surface 26, and each second protrusion 32 protrudes a second height 42 from the primary surface 26. The first height 40 is greater than the second height 42. In particular examples, the second height 42 is less than 50%, more preferably less than 30%, and still more preferably less than 20% of the first height 40. "Embossing roll primary surface" means the surface and regions, defined by the circumferential plane occupied by the substantially flat portions of the embossing roll 24, that extend between and around the first and second protrusions 30, 32. The protrusions 30, 32 can take any suitable form, such as pins, cones, pyramids, lines, bars, and the like. The cross-section of the protrusions can define any suitable shape, such as circular, rectangular, triangular, oval, rhomboid, irregular, or other shape.

The apparatus also includes a counter roll 44 having a counter roll primary surface 47. The counter roll includes recesses 50. "Counter roll primary surface" means the surface and regions, defined by the circumferential plane occupied by the substantially flat portions of the counter roll 44, that extend between and around the recesses 50. "Substantially flat portions" as used in the context of the preceding definition includes portions that have a slight curvature attributable to the convexity of the counter roll 44 itself, and further includes portions that have a minimal recess due to such factors as manufacturing wear or to a minimal recess imparted by the manufacturing process of the counter roll. "Minimal recess" as used in the context of the preceding definition means a recess or indentation having a depth, measured from the circumferential plane to the deepest part of the recess, of 0.05 millimeters or less.

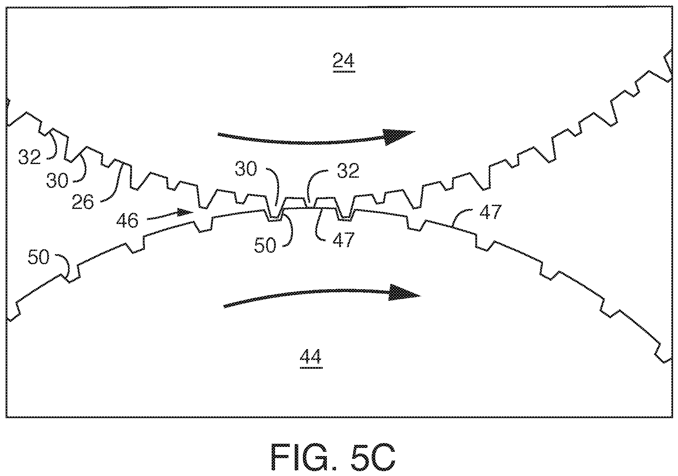

The embossing roll 24 is rotatable about a first axis of rotation 25 and the counter roll 44 is rotatable about a second axis of rotation 45. The embossing roll 24 and the counter roll 44 together form a rotary nip 46, and are positioned with respect to each other such that the first protrusions 30 individually extend into the recesses 50 proximate the nip 46 as the embossing roll 24 and counter roll 44 simultaneously rotate. The embossing roll 24 and counter roll 44 are further positioned next to each other such that the second protrusions 32 do not extend into the recesses 50 as the embossing roll 24 and counter roll 44 simultaneously rotate. In particular examples, the second protrusions 32 contact the counter roll 44 proximate the nip 46 as the embossing roll 24 and counter roll 44 simultaneously rotate when no tissue webs 22a, 22b are present, as representatively illustrated in Fig. 5C.

In examples, the first protrusions 30 make up less than 5% of the total number of protrusions, and/or the second protrusions 32 make up at least 95% of the total number of protrusions. In particular examples, no first protrusion 30 is adjacent another first protrusion 30. In alternative examples, every first protrusion 30 is adjacent at least one other first protrusion 30.

Referring again to Figs. 5A-5E, an example of a process 21 suitable for providing the product of the present invention includes providing an embossing roll 24 and a counter roll 44 as described above in conjunction with the apparatus aspect of the invention. The process further includes forming a rotary nip 46 between the embossing roll 24 and the counter roll 44, rotating the embossing roll 24 about a first axis of rotation 25, and rotating the counter roll 44 about a second axis of rotation 45. The process further includes advancing the plurality of tissue webs 22a, 22b through the nip 46. As the webs 22a, 22b pass through the rotary nip 46, the first protrusions 30 press a first series of portions 23 of the plurality of tissue webs 22a, 22b into the recesses 50 proximate the nip 46 as the embossing roll 24 and counter roll 44 simultaneously rotate to create a series of first embossments 60 connecting the tissue webs 22a, 22b to one another. The second protrusions 32 press a second series of portions 27 of the plurality of tissue webs 22a, 22b against the counter roll primary surface 47 as the embossing roll 24 and counter roll 44 simultaneously rotate to create a series of second embossments 62 connecting the tissue webs 22a, 22b to one another. After being embossed together, the plurality of tissue webs 22a, 22b together define a composite web 64.

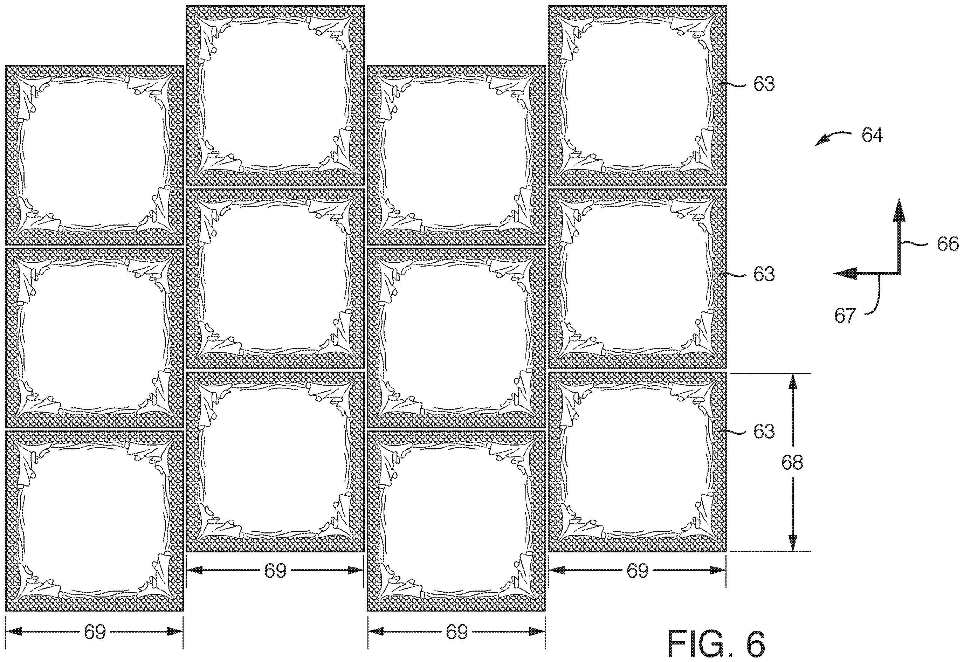

The series of first embossments 60 and the series of second embossments 62 together define an embossing pattern 63. Fig. 6 representatively illustrates a composite web 64. One embossing pattern 63 defines one product length 68 in the machine direction 66 of the process 21 and one product width 69 in the cross-machine direction 67 of the process 21. In particular examples, the process further includes cutting individual tissue products 70 from the composite web 64, wherein each individual tissue product 70 includes one embossing pattern 63. The exemplary composite web 64 shown in Fig. 6 has a composite web width equal to four product widths 69.

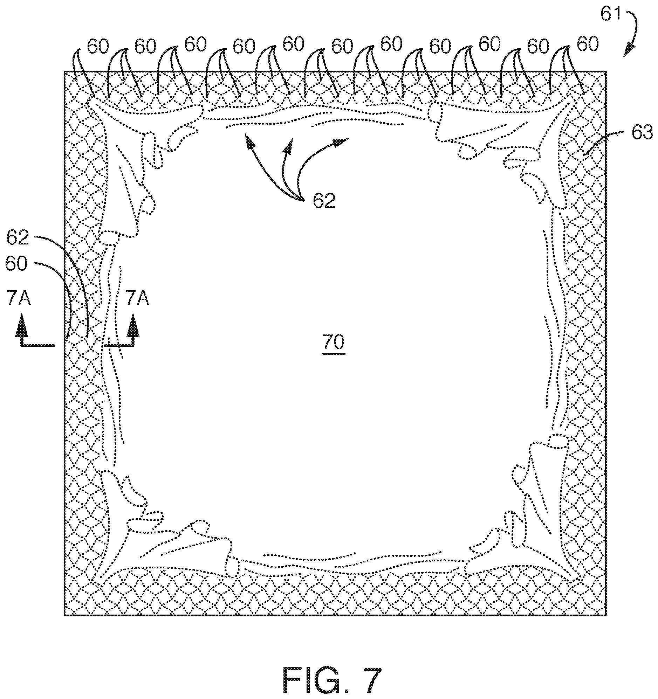

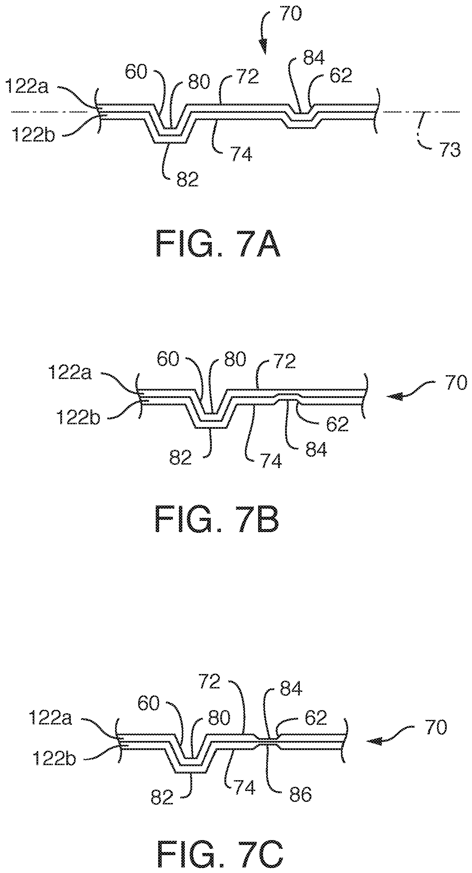

Referring to Figs. 7-9, in particular examples of the process 21, individual tissue products 70 emerge from the process 21, and the first embossments 60 and the second embossments 62 together define a total number of embossments 61. In examples, the first embossments 60 make up less than 5% of the total number of embossments 61, and the second embossments 62 comprise at least 95% of the total number of embossments 61.

For example, in the embodiment of Fig. 7, the first embossments 60 make up 2.3% of the total number of embossments 61, and the second embossments 62 make up 97.7% of the total number of embossments 61. The pattern 63 of Fig. 7 is predominantly made up of rhomboid figures defined by intersecting wavy lines of dot embossments. In this embodiment, half of the intersection points of these wavy lines of dot embossments are first embossments 60 (i.e., "matched steel" embossments). In Fig. 7, the first embossments 60 appear as dots, and each first embossment 60 is labeled on the top side region of the tissue product 70. All dots not labeled 60 are second embossments 62 (i.e., "pin to flat" embossments). The remaining three side regions of the tissue product 70 contain a distribution and arrangement of first and second embossments 60, 62 that is similar to that in the top side region.

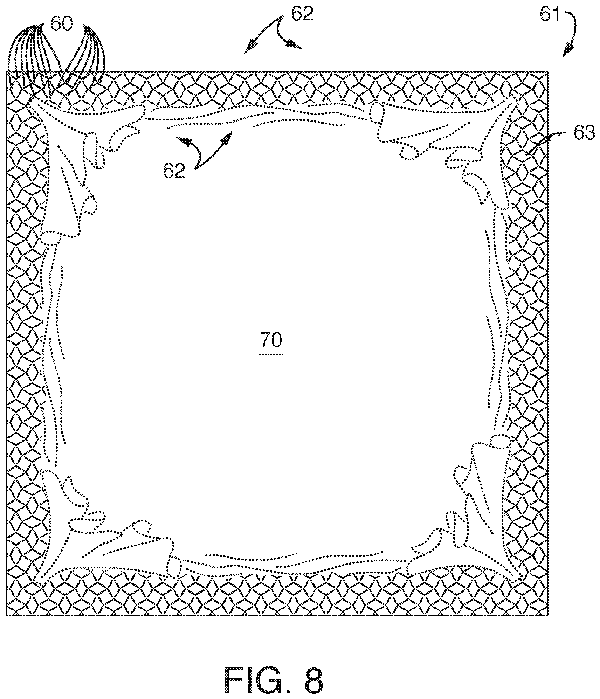

In another example, in the embodiment of Fig. 8, the first embossments 60 make up 10.3% of the total number of embossments 61, and the second embossments 62 make up 89.7% of the total number of embossments 61. The pattern 63 of Fig. 8 is, like that of Fig. 7, predominantly made up of rhomboid figures defined by intersecting wavy lines of dot embossments. In this embodiment, all of the intersection points of these wavy lines of dot embossments are first embossments 60 (i.e., "matched steel" embossments). In Fig. 8, the first embossments 60 appear as dots, and each first embossment 60 is labeled on the top upper left region of the tissue product 70. All dots not labeled 60 in this top upper left region are second embossments 62 (i.e., "pin to flat" embossments). The remaining portions of the tissue product border region contain a distribution and arrangement of first and second embossments 60, 62 that is similar to that in the top upper left region.

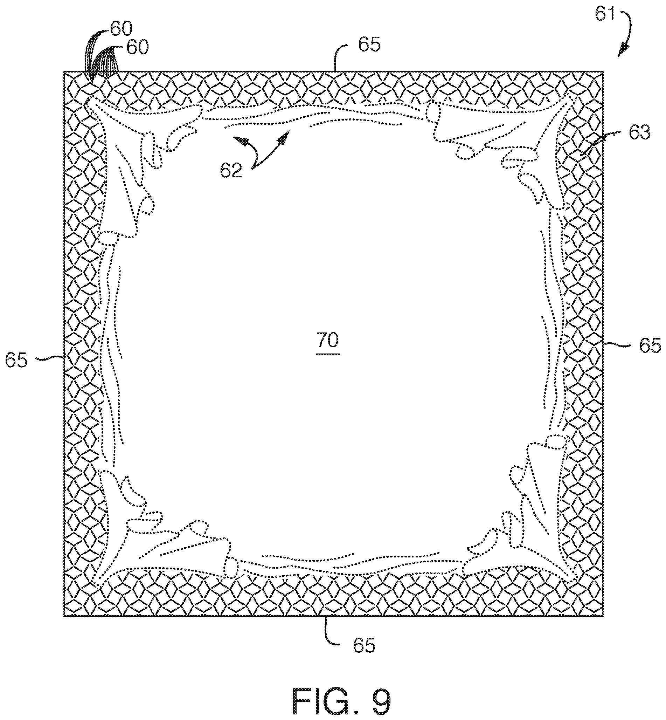

In another example, in the embodiment of Fig. 9, the first embossments 60 make up 18% of the total number of embossments 61, and the second embossments 62 make up 82% of the total number of embossments 61. The pattern 63 of Fig. 8 is, like that of Figs. 7 and 8, predominantly made up of rhomboid figures defined by intersecting wavy lines of dot embossments. In this embodiment, each point embossment having no other embossment along an imaginary straight that extends between it and the perimeter edge 65 (and that is perpendicular to the perimeter edge 65) of the tissue product 70 is a first embossment 60 (i.e., "matched steel" embossment). In Fig. 9, the first embossments 60 appear as dots, and each first embossment 60 is labeled on the top upper left corner of the tissue product 70, and all similarly positioned dot embossments around the periphery region of the tissue product 70 are first embossments 60. All other dots are second embossments 62 (i.e., "pin to flat" embossments).

In particular embodiments, no first embossment 60 is adjacent another first embossment 60. Examples of such embodiments are shown in Figs. 7 and 8. In other embodiments, every first embossment 60 is adjacent at least one other first embossment 60. An example of such an embodiment is shown in Fig. 9.

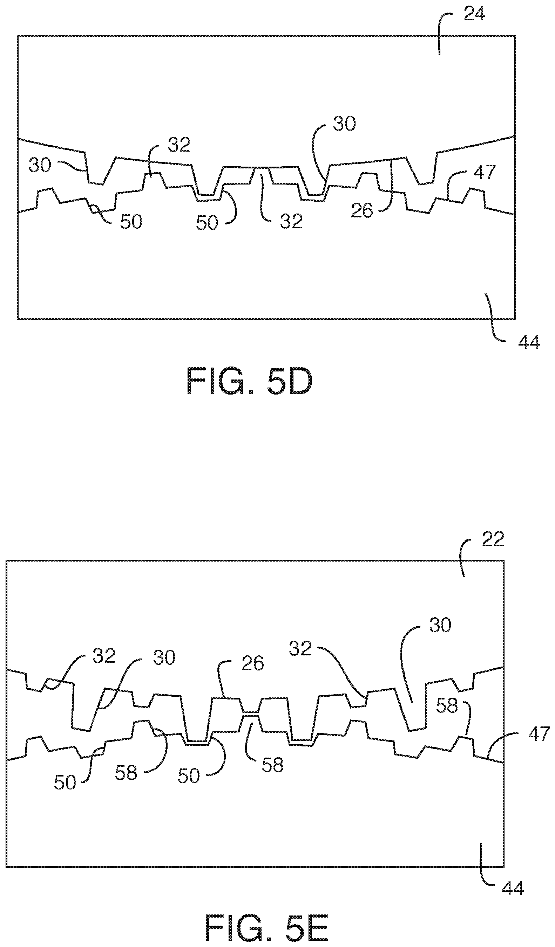

It should be noted that modifications of the above-described apparatus and processes can be made, and still achieve certain advantages offered by particular embodiments of the invention. For example, as noted in Fig. 5D, the second protrusions 32 can be moved from the roll 24 to the roll 44. In such an example, the second protrusions 32 will press the multi-ply tissue web (not shown) against the primary surface 26 of the roll 24. Thus, the example still combines aspects of both "matched steel" and "pin-to-flat" techniques, but, as representatively illustrated in Fig. 7B, the depressions 84 of the second embossments 62 of the resulting tissue product will have been moved from the first side 72 to the second side 74. In another example, as noted in Fig. 5E, the roll 24 can further include third protrusions 58. In such an example, the second protrusions 32 of the roll 22 will press the multi-ply tissue web (not shown) against the third protrusions 58 of the roll 24. Thus, the example combines aspects of both "matched steel" and "pin-to-pin" techniques, and, as representatively illustrated in Fig. 7C, the second embossments 62 on the first side 72 of the resulting tissue product will have second depressions 84 on the first side 72 and third depressions 86 on the second side 74 that are perfectly aligned with the second embossments 62 in the machine direction and cross-machine direction of the process.

The present invention relates to a multi-ply tissue product 70. Referring to Figs. 7 and 7A for example, the tissue product 70 includes a first tissue ply 122a and a second tissue ply 122b superposed over the first tissue ply 122a. The first tissue ply 122a and second tissue ply 122b are connected together via first embossments 60 and second embossments 62. The tissue product 70 has a first side 72, a second side 74, and a primary plane 73. The first embossments 60 define a series of first depressions 80 on the first side 72 and a series of protuberances 82 on the second side 74. The second embossments 62 define a series of second depressions 84 on the first side 72. The second embossments 62 have no protuberances on the second side 74.

Referring to Figs. 7-9, in the present invention, the first embossments 60 make up less than 20% of the total number of embossments 61, and the second embossments 62 make up at least 80% of the total number of embossments 61. In embodiments, the first embossments 60 make up less than 5% of the total number of embossments 61, and the second embossments 62 comprise at least 95% of the total number of embossments 61.

In particular embodiments, the first side 72 of the tissue product 70 defines a first side area, and an aggregate area of the first embossments 60 and the second embossments 62 occupies at most 15% and more particularly at most 10% of the first side area. In particular embodiments, an aggregate area of the first embossments 60 and the second embossments 62 occupies at most 70% and more particularly at most 60% of the area of the first side extending within a 1 centimeter wide outermost periphery of the product (where the majority of the embossments holding the plies together are in particular embodiments located). In particular embodiments, at least 90% of the first embossments are adjacent the perimeter edge 65. "Adjacent the perimeter edge" as used herein means within 0.5 centimeter of the perimeter edge 65.

Preferably, the first depressions 80 are deeper than the second depressions 84. In other embodiments, the second embossments 62 can include third depressions 57 on the second side 74, as representatively illustrated in Fig. 7C. This latter embodiment could occur when the second embossments are created via a "pin-to-pin" technique, as opposed to "pin-to-flat."

In particular embodiments, this invention merges "matched steel" techniques with one or both of "pin to flat" and "pin to pin" embossing techniques in a single dual-roll embossing unit. The resulting surface effect of this product in particular embodiments is one in which many or most regions are relatively smooth to the touch (being associated with the "pin to flat" or "pin to pin" techniques), with a minority of points having protuberances (being associated with the "matched steel" technique).

It will be appreciated that details of the foregoing embodiments, given for purposes of illustration, are not to be construed as limiting the scope of this invention. Although only a few exemplary embodiments of this invention have been described in detail, those skilled in the art will readily appreciate that many modifications are possible in the exemplary embodiments without materially departing from the novel teachings and advantages of this invention. Accordingly, all such modifications are intended to be included within the scope of this invention, which is defined in the following claims. Further, it is recognized that many embodiments may be conceived that do not achieve all of the advantages of some embodiments, particularly of the preferred embodiments, yet the absence of a particular advantage shall not be construed to necessarily mean that such an embodiment is outside the scope of the present invention.

## Claims

1. A tissue product (70) comprising a first tissue ply (122a) and a second tissue ply (122b) superposed over the first tissue ply (122a), the first tissue ply (122a) and second tissue ply (122b) connected together via first embossments (60) and second embossments (62), the tissue product (70) having a first side (72) and a second side (74),
wherein the first embossments (60) define a series of first depressions (80) on the first side (72) and a series of protuberances (82) on the second side (74),
wherein the second embossments (62) define a series of second depressions (84) on the first side (72), the second embossments (62) comprising no protuberances on the second side (74);
the tissue product (70) **characterised in that** the first embossments (60) and the second embossments (62) together define a total number of embossments, wherein the first embossments (60) comprise less than 20% of the total number of embossments.

2. The tissue product (70) of claim 1 further comprising a series of third depressions (57) on the second side (74), each third depression (57) aligned with a second depression (84) in a length and a width dimension of the tissue product (70).

3. A tissue product (70) comprising a first tissue ply (122a) and a second tissue ply (122b) superposed over the first tissue ply (122a), the first tissue ply (122a) and second tissue ply (122b) connected together via first embossments (60) and second embossments (62), the tissue product (70) having a first side (72) and a second side (74),
wherein the first embossments (62) define a series of first depressions (80) on the first side (72) and a series of protuberances (82) on the second side (74),
wherein the second embossments (62) define a series of second depressions (84) on the second side (74), the second embossments (62) comprising no protuberances on the first side (72);
the tissue product (70) **characterised in that** the first embossments (60) and the second embossments (62) together define a total number of embossments, wherein the first embossments (60) comprise less than 20% of the total number of embossments.

4. The tissue product (70) of any preceding claim wherein the first depressions (80) are deeper than the second depressions (84).

5. The tissue product (70) of any preceding claim wherein the first embossments (60) comprise less than 5% of the total number of embossments and wherein the second embossments (62) comprise at least 95% of the total number of embossments.

6. The tissue product (70) of any preceding claim wherein the first side (72) of the tissue product (70) defines a first side area, and wherein an aggregate area of the first embossments (60) and the second embossments (62) is at most 15% of the first side area.

7. The tissue product (70) of any preceding claim wherein no first embossment (60) is adjacent to another first embossment (60).

8. The tissue product (70) of any of claims 1-6 wherein every first embossment (60) is adjacent to at least one other first embossment (60).

9. The tissue product (70) of claim 8 wherein the tissue product (70) has a perimeter edge (65), and wherein at least 90% of the first embossments (60) are within 0.5 cm of the perimeter edge (65).

10. The tissue product (70) of claim 3 further comprising a series of third depressions (57) on the first side (72), each third depression (57) aligned with a second depression (84) in a length and a width dimension of the tissue product (70).

## Patentansprüche

1. Gewebeprodukt (70), umfassend eine erste Gewebelage (122a) und eine zweite Gewebelage (122b), die die erste Gewebelage (122a) überlagert, wobei die erste Gewebelage (122a) und die zweite Gewebelage (122b) über erste Prägungen (60) und zweite Prägungen (62) miteinander verbunden sind, wobei das Gewebeprodukt (70) eine erste Seite (72) und eine zweite Seite (74) aufweist,
wobei die ersten Prägungen (60) eine Reihe von ersten Vertiefungen (80) auf der ersten Seite (72) und eine Reihe von Vorsprüngen (82) auf der zweiten Seite (74) definieren,
wobei die zweiten Prägungen (62) eine Reihe von zweiten Vertiefungen (84) auf der ersten Seite (72) definieren, wobei die zweiten Prägungen (62) keine Vorsprünge auf der zweiten Seite (74) umfassen;
wobei das Gewebeprodukt (70) **dadurch gekennzeichnet ist, dass** die ersten Prägungen (60) und die zweiten Prägungen (62) zusammen eine Gesamtzahl an Prägungen definieren, wobei die ersten Prägungen (60) weniger als 20 % der Gesamtzahl von Prägungen umfassen.

2. Gewebeprodukt (70) nach Anspruch 1, ferner umfassend eine Reihe von dritten Vertiefungen (57) auf der zweiten Seite (74), wobei jede dritte Vertiefung (57) mit einer zweiten Vertiefung (84) in einer Längen- und einer Breitenabmessung des Gewebeprodukts (70) ausgerichtet ist.

3. Gewebeprodukt (70), umfassend eine erste Gewebelage (122a) und eine zweite Gewebelage (122b), die die erste Gewebelage (122a) überlagert, wobei die erste Gewebelage (122a) und die zweite Gewebelage (122b) über erste Prägungen (60) und zweite Prägungen (62) miteinander verbunden sind, wobei das Gewebeprodukt (70) eine erste Seite (72) und eine zweite Seite (74) aufweist,
wobei die ersten Prägungen (62) eine Reihe von ersten Vertiefungen (80) auf der ersten Seite (72) und eine Reihe von Vorsprüngen (82) auf der zweiten Seite (74) definieren,
wobei die zweiten Prägungen (62) eine Reihe von zweiten Vertiefungen (84) auf der zweiten Seite (74) definieren, wobei die zweiten Prägungen (62) keine Vorsprünge auf der ersten Seite (72) umfassen;
wobei das Gewebeprodukt (70) **dadurch gekennzeichnet ist, dass** die ersten Prägungen (60) und die zweiten Prägungen (62) zusammen eine Gesamtzahl an Prägungen definieren, wobei die ersten Prägungen (60) weniger als 20 % der Gesamtzahl von Prägungen umfassen.

4. Gewebeprodukt (70) nach einem der vorhergehenden Ansprüche, wobei die ersten Vertiefungen (80) tiefer als die zweiten Vertiefungen (84) sind.

5. Gewebeprodukt (70) nach einem der vorhergehenden Ansprüche, wobei die ersten Prägungen (60) weniger als 5 % der Gesamtanzahl an Prägungen umfassen und wobei die zweiten Prägungen (62) zumindest 95 % der Gesamtanzahl an Prägungen umfassen.

6. Gewebeprodukt (70) nach einem der vorhergehenden Ansprüche, wobei die erste Seite (72) des Gewebeprodukts (70) einen ersten Seitenbereich definiert, und wobei ein Gesamtbereich der ersten Prägungen (60) und der zweiten Prägungen (62) höchstens 15 % des ersten Seitenbereichs beträgt.

7. Gewebeprodukt (70) nach einem der vorhergehenden Ansprüche, wobei keine erste Prägung (60) an eine andere erste Prägung (60) angrenzt.

8. Gewebeprodukt (70) nach einem der Ansprüche 1 bis 6, wobei jede erste Prägung (60) an zumindest eine andere erste Prägung (60) angrenzt.

9. Gewebeprodukt (70) nach Anspruch 8, wobei das Gewebeprodukt (70) eine Umfangskante (65) aufweist und wobei zumindest 90 % der ersten Prägungen (60) innerhalb von 0,5 cm der Umfangskante (65) liegen.

10. Gewebeprodukt (70) nach Anspruch 3, ferner umfassend eine Reihe von dritten Vertiefungen (57) auf der ersten Seite (72), wobei jede dritte Vertiefung (57) mit einer zweiten Vertiefung (84) in einer Längen- und einer Breitenabmessung des Gewebeprodukts (70) ausgerichtet ist.

## Revendications

1. Produit en papier tissue (70) comprenant une première couche en papier tissue (122a) et une deuxième couche en papier tissue (122b) superposée sur la première couche en papier tissue (122a), la première couche en papier tissue (122a) et la deuxième couche en papier tissue (122b) étant reliées ensemble via des premiers gaufrages (60) et des deuxièmes gaufrages (62), le produit en papier tissue (70) ayant un premier côté (72) et un deuxième côté (74),
dans lequel les premiers gaufrages (60) définissent une série de premières dépressions (80) sur le premier côté (72) et une série de protubérances (82) sur le deuxième côté (74),
dans lequel les deuxièmes gaufrages (62) définissent une série de deuxièmes dépressions (84) sur le premier côté (72), les deuxièmes gaufrages (62) ne comprenant pas de protubérances sur le deuxième côté (74) ;
le produit en papier tissu (70) **caractérisé en ce que** les premiers gaufrages (60) et les deuxièmes gaufrages (62) définissent ensemble un nombre total de gaufrages, dans lequel les premiers gaufrages (60) constituent moins de 20 % du nombre total de gaufrages.

2. Produit en papier tissue (70) selon la revendication 1, comprenant en outre une série de troisièmes dépressions (57) sur le deuxième côté (74), chaque troisième dépression (57) étant alignée avec une deuxième dépression (84) dans une dimension en longueur et en largeur du produit en papier tissue (70).

3. Produit en papier tissue (70) comprenant une première couche en papier tissue (122a) et une deuxième couche en papier tissue (122b) superposée sur la première couche en papier tissue (122a), la première couche en papier tissue (122a) et la deuxième couche en papier tissue (122b) étant reliées ensemble via des premiers gaufrages (60) et des deuxièmes gaufrages (62), le produit en papier tissue (70) ayant un premier côté (72) et un deuxième côté (74),
dans lequel les premiers gaufrages (62) définissent une série de premières dépressions (80) sur le premier côté (72) et une série de protubérances (82) sur le deuxième côté (74),
dans lequel les deuxièmes gaufrages (62) définissent une série de deuxièmes dépressions (84) sur le deuxième côté (74), les deuxièmes gaufrages (62) ne comprenant pas de protubérances sur le premier côté (72) ;
le produit en papier tissu (70) **caractérisé en ce que** les premiers gaufrages (60) et les deuxièmes gaufrages (62) définissent ensemble un nombre total de gaufrages, dans lequel les premiers gaufrages (60) constituent moins de 20 % du nombre total de gaufrages.

4. Produit en papier tissue (70) selon l'une quelconque des revendications précédentes, dans lequel les premières dépressions (80) sont plus profondes que les deuxièmes dépressions (84).

5. Produit en papier tissue (70) selon l'une quelconque des revendications précédentes, dans lequel les premiers gaufrages (60) constituent moins de 5 % du nombre total de gaufrages et dans lequel les deuxièmes gaufrages (62) constituent au moins 95 % du nombre total de gaufrages.

6. Produit en papier tissue (70) selon l'une quelconque des revendications précédentes, dans lequel le premier côté (72) du produit en papier tissue (70) définit une première zone latérale, et dans lequel une zone agrégée des premiers gaufrages (60) et des deuxièmes gaufrages (62) représente au plus 15 % de la première zone latérale.

7. Produit en papier tissue (70) selon l'une quelconque des revendications précédentes, dans lequel aucun premier gaufrage (60) n'est adjacent à un autre premier gaufrage (60) .

8. Produit en papier tissue (70) selon l'une quelconque des revendications 1-6, dans lequel chaque premier gaufrage (60) est adjacent à au moins un autre premier gaufrage (60) .

9. Produit en papier tissue (70) selon la revendication 8, dans lequel le produit en papier tissue (70) a un bord périphérique (65), et dans lequel au moins 90 % des premiers gaufrages (60) sont à moins de 0,5 cm du bord périphérique (65).

10. Produit en papier tissue (70) selon la revendication 3, comprenant en outre une série de troisièmes dépressions (57) sur le premier côté (72), chaque troisième dépression (57) étant alignée avec une deuxième dépression (84) dans une dimension en longueur et en largeur du produit en papier tissue (70).
